# EUROPÄISCHE PATENTSCHRIFT

(11) **EP 3 639 971 B1**
(45) Veröffentlichungstag und Bekanntmachung des Hinweises auf die Patenterteilung: **10.09.2025**
(21) Anmeldenummer: 19000466.3
(22) Anmeldetag: 11.10.2019
(51) Int. Cl.: B23Q 7/04, B27F 1/02, B27M 1/08

(54) **VERFAHREN ZUM BEARBEITEN VON LÄNGLICHEN WERKSTÜCKEN AUS HOLZ, KUNSTSTOFF UND DERGLEICHEN SOWIE MASCHINE ZUR DURCHFÜHRUNG DES VERFAHRENS**
METHOD FOR MACHINING ELONGATED WORKPIECES MADE OF WOOD, PLASTIC AND THE LIKE, AND MACHINE FOR CARRYING OUT SAID METHOD
PROCÉDÉ DE TRAITEMENT DES PIÈCES LONGUES EN BOIS, EN MATIÈRE PLASTIQUE ET ANALOGUE, AINSI QUE MACHINE PERMETTANT DE METTRE EN OEUVRE LEDIT PROCÉDÉ

(30) Priorität: 15.10.2018 DE 102018008199
(43) Veröffentlichungstag der Anmeldung: 22.04.2020
(73) Patentinhaber: Michael Weinig AG, 97941 Tauberbischofsheim (DE)
(72) Erfinder: EGERTER, Rolf, 74722 Buchen (Odenwald) (DE); GURKA, Paul, 69429 Waldbrunn (DE); HEMMERICH, Michael, 97900 Külsheim (DE)
(74) Vertreter: Kohl, Karl-Heinz

(56) Entgegenhaltungen:
- DE-A1- 10 137 839
- DE-A1- 102014 222 423
- DE-A1- 102015 218 814
- DE-B4- 10 137 839
- IT-A1- PD20 100 318

## Beschreibung

Die Erfindung betrifft ein Verfahren zum Bearbeiten von länglichen Werkstücken aus Holz, Kunststoff und dergleichen nach dem Oberbegriff der Ansprüche 1, 9 und 10 sowie eine Maschine zur Durchführung dieses Verfahrens nach dem Oberbegriff des Anspruches 12.

Bei der Bearbeitung von länglichen, insbesondere stabförmigen Werkstücken ist es bekannt, diese in einer ersten Klemmeinheit zwischen oberen und unteren Klemmbacken einzuspannen und längs eines Werkzeuges vorbeizufahren, wobei eine Längsseite des Werkstückes bearbeitet wird. Damit die gegenüberliegende Längsseite des Werkstückes bearbeitet werden kann, wird die Klemmeinheit mit dem teilbearbeiteten Werkstück neben eine zweite Klemmeinheit gefahren, deren obere und untere Klemmbacken das Werkstück von der gegenüberliegenden, bereits bearbeiteten Längsseite aus spannen. Dann kann die Einspannung durch die erste Klemmeinheit gelöst werden, die dann zur Aufnahme eines nächsten Werkstückes zurückgefahren werden kann. Die noch nicht bearbeitete Längsseite des Werkstückes liegt in der zweiten Klemmeinheit frei, so dass auch diese Längsseite mit dem Werkzeug bearbeitet werden kann.

Beide Klemmeinheiten übergreifen das Werkstück an der Ober- und Unterseite mit ihren Klemmbacken. Die Übergabe des Werkstückes zwischen den beiden Klemmeinheiten in der Art, dass die jeweils noch nicht bearbeitete Längsseite für den Eingriff des Werkzeuges freiliegt und das Werkstück dennoch zuverlässig in der zweiten Klemmeinheit eingespannt ist, ist je nach Werkstück und Profilierung der ersten Längsseite nicht immer möglich, beispielsweise bei schmalen Werkstücken. Werkstücke, bei denen durch die erste Profilierung nicht mehr genügend Klemmfläche an Ober- oder Unterseite für die Spannung in der zweiten Klemmeinheit verfügbar ist, müssen in der zweiten Klemmeinheit in der Regel im Falz geklemmt werden, was bei Klemmeinheiten, die nicht quer zur Werkstücklängsrichtung verstellbar sind, oftmals nicht möglich ist. Solche Werkstücke werden beispielsweise im Fenster- oder im Möbelbau eingesetzt.

Solche Werkstücke erfordern eine flexible Spannposition quer zu ihrer Längsrichtung. Wenn die Klemmeinheiten nicht quer zur Werkstücklängsrichtung verstellbar und positionierbar sind, um diese flexible Spannposition einzunehmen, können die Werkstücke nicht direkt von der ersten zur zweiten Klemmeinheit übergeben werden, sondern müssen quer zur Längsrichtung verschoben werden. Dabei dürfen sie in dem kompletten Übergabeprozess von einer zu der anderen Klemmeinheit zu keinem Zeitpunkt frei werden, um die Bearbeitungsgenauigkeit zu gewährleisten.

Bei einem bekannten Verfahren und einer bekannten Maschine (DE 101 37 839 A1) werden die länglichen Werkstücke mit einer ersten Klemmeinrichtung zwischen einer oberen und einer unteren Klemmbacke so eingespannt, dass wenigstens eine Seite des Werkstückes bearbeitet werden kann. Eine zweite Klemmeinheit mit einer oberen und einer unteren Klemmbacke erhält das Werkstück von der ersten Klemmeinheit und wird vertikal so eingespannt, dass eine weitere Behandlung am Werkstück vorgenommen werden kann. Der Verschiebeweg der Werkstücke quer zu ihrer Längsrichtung bei der Übergabe wird durch Anschläge begrenzt, an denen die Werkstücke zur Anlage kommen. Sobald die Werkstücke an den Anschlägen anliegen, werden die Werkstücke vertikal gespannt.

Der Erfindung liegt die Aufgabe zugrunde, das gattungsgemäße Verfahren und die gattungsgemäße Maschine so auszubilden, dass auch schmale längliche Werkstücke oder Werkstücke, die in der zweiten Klemmeinheit in einem Falz gespannt werden müssen, zuverlässig bearbeitet werden können.

Diese Aufgabe wird beim gattungsgemäßen Verfahren erfindungsgemäß mit den kennzeichnenden Merkmalen der Ansprüche 1, 9 und 10, und bei der gattungsgemäßen Maschine erfindungsgemäß mit den kennzeichnenden Merkmalen des Anspruches 12 gelöst.

Beim erfindungsgemäßen Verfahren werden die Werkstücke zunächst mit den oberen und unteren Klemmbacken der ersten Klemmeinheit so eingespannt, dass die eine Längsseite des Werkstückes freiliegt und mit einem entsprechenden Werkzeug bearbeitet werden kann. Anschließend wird das Werkstück an die zweite Klemmeinheit übergeben. Hierbei wird das Werkstück zunächst horizontal eingespannt, während es noch durch die oberen und unteren Klemmbacken der ersten Klemmeinheit eingespannt ist. Nach der horizontalen Einspannung kann die vertikale Spannung der ersten Klemmeinheit aufgehoben werden. Dann kann das Werkstück von der zweiten Klemmeinheit übernommen und mit deren oberen und unteren Klemmbacken vertikal eingespannt werden. Erst anschließend wird die horizontale Einspannung des Werkstückes gelöst. Auf diese Weise ist das Werkstück bei der Übergabe von der ersten zur zweiten Klemmeinheit stets eingespannt, so dass nicht die Gefahr besteht, dass beispielsweise durch Eigenspannungen des Werkstückes dieses in sich verbogen oder verdreht wird. Auf diese Weise können sehr maßhaltige Werkstücke hergestellt werden.

Es ist erfindungsgemäß auch möglich, dass die Werkstücke nach der horizontalen Einspannung und gelöster Vertikalspannung quer zu ihrer Längsrichtung verschoben und danach von den Klemmbacken der gleichen Klemmeinheit vertikal gespannt werden. Anschließend wird die horizontale Einspannung gelöst.

Erfindungsgemäß werden die Werkstücke bei dem Übergabeprozess horizontal eingespannt und bei dieser Einspannung seitlich, das heißt quer zu ihrer Längsrichtung verschoben. Das Verschieben kann im einen Fall direkt bei der Übergabe von der ersten zur zweiten Klemmeinheit erfolgen.

Der Verschiebevorgang kann im anderen Fall in einem vorgelagerten Verfahrensschritt erfolgen, bei dem das Werkstück zunächst in einer ersten Klemmeinheit um das für die Spannung in einer zweiten Klemmeinheit erforderliche Maß verschoben wird und wieder in dieser ersten Klemmeinheit mittels deren oberen und unteren Klemmbacken vertikal eingespannt wird. Dies kann beispielsweise in einer Beladeposition erfolgen, welche einen quer zur Werkstücklängsachse positionierbaren Anschlag aufweist. Die Klemmeinheit hat lediglich einen verstellbaren Anschlag als Gegendruckelement. Danach verfahren die beiden Klemmeinheiten in die Übergabeposition und können das Werkstück direkt in herkömmlicher Weise übergeben. Bei dieser Ausführung ist es nicht erforderlich, dass einer der Klemmeinheiten den positionierbaren Anschlag aufweist, sondern es kann beispielsweise der maschinenfest angeordnete Positionieranschlag der Beladestation genutzt werden.

Zur horizontalen Einspannung der Werkstücke sind vorteilhaft Anschläge vorgesehen, von denen wenigstens einer quer zur Längsrichtung der Werkstücke verstellbar, vorteilhaft positionierbar ist. Mit diesem verstellbaren Anschlag lässt sich die Einspanntiefe der oberen und unteren Klemmbacken einfach einstellen.

Dieser einstellbare Anschlag kann als Gegendruckelement für den horizontalen Einspannvorgang des Werkstückes eingesetzt werden. Der Spanndruck wird in diesem Falle von dem anderen Anschlag erzeugt, mit dem das Werkstück gegen den verstellbaren Anschlag gedrückt wird.

Aufgrund der horizontalen Einspannung der Werkstücke können diese mittels der seitlichen Anschläge bei der Übergabe von der ersten zur zweiten Klemmeinheit quer zur Längsachse verschoben werden. Damit lassen sich auch sehr schmale stabförmige oder mit Profilen versehene Werkstücke so einspannen, dass die jeweiligen Werkstückseiten durch ein entsprechendes Werkzeug bearbeitet werden können.

Vorteilhaft wird zumindest die eine Klemmeinheit längs einer Führungsbahn verfahren, um das eingespannte Werkstück am Werkzeug zur Werkstückbearbeitung vorbeizufahren und um die Klemmeinheit zur Übergabe an die andere Klemmeinheit in die Übergabeposition zu verschieben.

Vorteilhaft sind beide Klemmeinheiten längs jeweils einer Führungsbahn verschiebbar.

Zur Bearbeitung der eingespannten Werkstücke werden vorteilhaft die Klemmeinheiten längs der Führungsbahnen verfahren. Es ist grundsätzlich aber auch möglich, dass das Werkzeug an den Klemmeinheiten vorbeigefahren wird. Auch eine Kombination aus der Bewegung des Werkstückes und des Werkzeuges ist möglich.

Bei einer erfindungsgemäßen Ausführungsform ist zumindest bei der einen Klemmeinheit die untere Klemmbacke zur Erzeugung der Spannkraft in Höhenrichtung verstellbar. In diesem Falle dient die obere Klemmbacke dieser Klemmeinheit als Bezugsebene, gegen die das Werkstück gespannt wird.

Am Werkstück wird bei einer weiteren Ausführungsform, während es in der ersten Klemmeinheit eingespannt ist, ein Falz hergestellt, der sich in Längsrichtung des Werkstückes erstreckt. Ein solches Werkstück wird in der zweiten Klemmeinheit im Falz über einen den Falz begrenzenden Absatz mit der oberen Klemmbacke gegen die untere Klemmbacke der jeweiligen Klemmeinheit gespannt. Eine solche Einspannung bietet sich dann an, wenn der Falz im Bereich der Werkstückoberseite angeordnet ist.

Ist der Falz hingegen im Bereich der Werkstückunterseite vorgesehen, dann wird die untere Klemmbacke der jeweiligen Klemmeinheit so weit nach oben gefahren, dass mit ihr im Falz gegen die obere Klemmbacke gespannt wird.

Eine maßhaltige Bearbeitung der Werkstücke ist gewährleistet, da diese, solange sie horizontal eingespannt sind, von der einen Klemmeinheit relativ zu der anderen Klemmeinheit quer zu ihrer Längsrichtung verschoben werden. Durch diesen Verschiebevorgang können die Werkstücke optimal der Klemmeinheit so zugeführt werden, dass ihre Klemmbacken dieses Werkstück so einspannen können, dass die zu bearbeitende Werkstückseite freiliegt.

Bei einer anderen erfindungsgemäßen Ausbildung werden wenigstens zwei Werkstücke als Werkstückpaket neben- oder aufeinanderliegend so in der ersten Klemmeinheit eingespannt, dass zumindest eine Seite des einen Werkstückes des Werkstückpaketes bearbeitet werden kann. Damit eine weitere Bearbeitung erfolgen, beispielsweise eine entsprechende Seite des anderen Werkstückes des Werkstückpaketes bearbeitet werden kann, wird das Werkstückpaket an die zweite Klemmeinheit übergeben. Hierbei wird das Werkstückpaket horizontal eingespannt, wobei die vertikale Einspannung durch die erste Klemmeinheit noch aufrechterhalten wird. Sobald die horizontale Einspannung erfolgt ist, wird die vertikale Einspannung der ersten Klemmeinheit gelöst und das eingespannte Werkstückpaket der zweiten Klemmeinheit übergeben. Diese Übergabe erfolgt so, dass nach Einspannung des Werkstückpaketes mit den oberen und unteren Klemmbacken der zweiten Klemmeinheit wenigstens eine Seite des anderen Werkstückes des Werkstückpaketes bearbeitet werden kann. Sobald die vertikale Einspannung des Werkstückpaketes in der zweiten Klemmeinheit vorgenommen worden ist, kann die horizontale Einspannung des Werkstückpaketes aufgehoben werden. Die erste Klemmeinheit steht dann zur Übernahme des nächsten zu bearbeitenden Werkstückes bereit.

Der Vorteil bei Einspannung zweier oder mehrerer Werkstücke nebeneinander ist vor allem, dass bei gleichem Profil eine gemeinsame Endenbearbeitung in einem Arbeitsgang stattfinden kann.

Bei einer anderen erfindungsgemäßen Ausbildung werden wenigstens zwei Werkstücke als Werkstückpaket neben- und/oder aufeinanderliegend so in der ersten Klemmeinheit eingespannt, dass zumindest eine Seite des einen Werkstückes des Werkstückpaketes bearbeitet werden kann, dass das Werkstückpaket anschließend bei vertikaler Einspannung horizontal eingespannt wird, und dass das so eingespannte Werkstückpaket nach Lösen der vertikalen Einspannung quer zur Längsrichtung des Werkstückpaketes verschoben und danach von den Klemmbacken der gleichen Klemmeinheit vertikal eingespannt wird und anschließend die horizontale Einspannung gelöst wird.

Je nach Ausbildung des Werkstückpaketes und Bedarf wird dieses bei horizontaler Einspannung bei der Übergabe von der einen zur anderen Klemmeinheit quer zur Längsrichtung der Werkstücke verschoben. Dadurch lässt sich das Werkstückpaket sehr genau in der zweiten Klemmeinheit positionieren.

Das Werkstückpaket kann nicht nur zwei, sondern beispielsweise auch vier oder acht Werkstücke aufweisen, die neben- und aufeinanderliegend zum Werkstückpaket zusammengestellt werden. Auf diese Weise können gleichzeitig mehrere Werkstücke des Werkstückpaketes vor allem an ihrer Stirnseite bearbeitet werden, wobei die Werkstücke bei der Übergabe von der ersten zur zweiten Klemmeinheit horizontal eingespannt sind, so dass die Werkstücke zu keiner Zeit des Übergabevorganges frei liegen und nicht eingespannt sind.

Die erfindungsgemäße Maschine zeichnet sich dadurch aus, dass zumindest die eine Klemmeinheit zur Einstellung der Einspanntiefe des Werkstückes wenigstens einen positionierbaren Anschlag aufweist. Er lässt sich manuell oder gesteuert so quer zur Längsrichtung der Werkstücke bzw. der Verfahrrichtung der Klemmeinheit positionieren, dass das am Anschlag anliegende Werkstück so von den Klemmbacken dieser Klemmeinheit vertikal gespannt werden kann, dass die entsprechende Werkstückseite durch das Werkzeug bearbeitet werden kann. Die andere Klemmeinheit ist mit einem Spanndruckelement versehen, mit dem das Werkstück quer zu seiner Längsrichtung bzw. quer zur Verfahrrichtung der Klemmeinheit gegen den Anschlag gespannt werden kann. Die horizontale Einspannung des Werkstückes erfolgt somit zwischen dem Spanndruckelement und dem Anschlag. Durch Verstellen und Positionierung des Anschlags bei der Übergabe von der ersten zur zweiten Klemmeinheit kann das Werkstück quer zur Längsrichtung verschoben werden. Durch Kraftbeaufschlagung des Spanndruckelements liegt dieses während des Verschiebevorgangs stets am Werkstück an und spannt es gegen den Anschlag, so dass es bei der Übergabe stets eingespannt bleibt.

Bei einer weiteren erfindungsgemäßen Ausbildung ist die untere Klemmbacke zumindest der einen Klemmeinheit in Vertikalrichtung zur Aufbringung der Spannkraft verstellbar. Dadurch können insbesondere Werkstücke zuverlässig eingespannt werden, die im Bereich der Werkstückunterseite einen Falz aufweisen. In diesem Fall wird die untere Klemmbacke von unten her in diesen Falz und gegen einen diesen Falz begrenzenden Absatz bzw. Steg gefahren und gegen die obere Klemmbacke der Klemmeinheit gespannt. Vorteilhaft dient die obere Klemmbacke beim Spannvorgang als Bezugsfläche für die vertikale Einspannung des Werkstückes. Die untere Klemmbacke spannt das Werkstück gegen die obere Klemmbacke.

Bei einer vorteilhaften Ausführungsform sind die oberen oder unteren Klemmbacken mit wenigstens einem wippenförmigen schwenkbaren Klemmelement versehen, das in der Spannlage am Werkstück anliegt.

Das wippenförmige Klemmelement bildet einen zweiarmigen Hebel, dessen Hebelarme auf zwei nebeneinander liegenden Werkstücken innerhalb eines Werkstückpaketes aufliegen. Dadurch können trotz eventueller Höhendifferenz der beiden Teile, beide Teile sicher geklemmt werden.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: in vereinfachter und perspektivischer Darstellung eine erfindungsgemäße Maschine zur Bearbeitung von Werkstücken mit einer erfindungsgemäßen Klemmvorrichtung für die Werkstücke,
- Fig. 2 und Fig. 3: den Umspannvorgang bei der Bearbeitung des Werkstückes zwischen zwei nebeneinander liegenden Klemmeinheiten der erfindungsgemäßen Klemmvorrichtung, in Richtung des Pfeiles A in Fig. 1 gesehen,
- Fig. 4: in perspektivischer Darstellung eine Klemmeinheit der Klemmvorrichtung,
- Fig. 5: in perspektivischer Darstellung eine weitere Ausführungsform einer Klemmeinheit der Klemmvorrichtung.

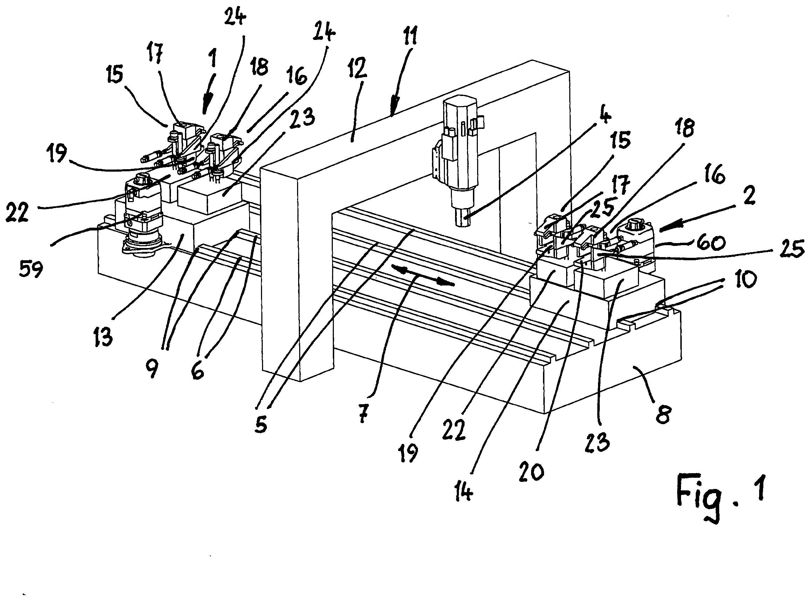

Fig. 1 zeigt in vereinfachter und schematischer Darstellung eine Maschine, auf der längliche, wie beispielsweise stabförmige Werkstücke aus Holz, Kunststoff und dergleichen bearbeitet werden können. Die Werkstücke werden in noch zu beschreibender Weise in Klemmeinheiten 1, 2 einer Klemmvorrichtung 3 so eingespannt, dass sie bei der Bearbeitung durch entsprechende Werkzeuge 4 nicht verrutschen können.

Die beiden Klemmeinheiten 1, 2 sind auf jeweils einer Führungsbahn 5, 6 bewegbar. Die beiden Führungsbahnen 5, 6 liegen parallel zueinander und, in Verschieberichtung 7 der Klemmeinheiten 1, 2 gesehen, nebeneinander. Im Ausführungsbeispiel werden die Führungsbahnen 5, 6 jeweils durch zwei mit Abstand parallel zueinander liegende Führungsleisten gebildet, die an einem Maschinentisch 8 vorgesehen sind. Die beiden Klemmeinheiten 1, 2 sind mit entsprechenden Führungen 9, 10 in Form von nutförmigen Vertiefungen versehen, in welche die Führungsleisten eingreifen.

Die Führung für die Klemmeinheiten 1, 2 kann selbstverständlich auch eine andere Gestaltung haben. Die Führungsbahnen 5, 6 sind so vorgesehen, dass die beiden Klemmeinheiten mit geringem Abstand aneinander vorbeifahren können, wie im Folgenden noch im Einzelnen erläutert werden wird.

Die beiden Klemmeinheiten 1, 2 sind vorteilhaft spiegelsymmetrisch zueinander ausgebildet und angeordnet. Grundsätzlich ist es aber möglich, dass die beiden Klemmeinheiten 1, 2 der Klemmvorrichtung 3 unterschiedlich ausgebildet sind.

Das Werkzeug 4 zur Bearbeitung der Werkstücke ist beispielhaft an einem Portal 11 gelagert, das den Maschinentisch 8 überspannt. Das Werkzeug 4 ist beispielhaft an einem Querträger 12 des Portals 11 vorgesehen und kann in Höhenrichtung sowie längs des Querträgers 12 verfahren werden Zusätzlich ist eine Schwenkachse, die parallel zur Verschieberichtung 7 liegt, vorhanden, so dass die Achse des Werkzeuges 4 beispielsweise in eine horizontale Lage eingestellt werden kann.

Die beiden Klemmeinheiten 1, 2 haben jeweils einen Schlitten 13, 14, an dem ein Antrieb 59, 60 vorgesehen ist, mit dem der Schlitten 13, 14 auf dem Maschinentisch 8 auf der jeweiligen Führungsbahn 5, 6 verfahrbar ist.

Jede Klemmeinheit 1, 2 ist mit zwei Klemmbackenpaaren 15, 16 versehen. Sie weisen jeweils eine obere Klemmbacke 17, 18 und eine untere Klemmbacke 19, 20 auf. Die oberen und die unteren Klemmbacken sind jeweils in Höhenrichtung gegeneinander verstellbar.

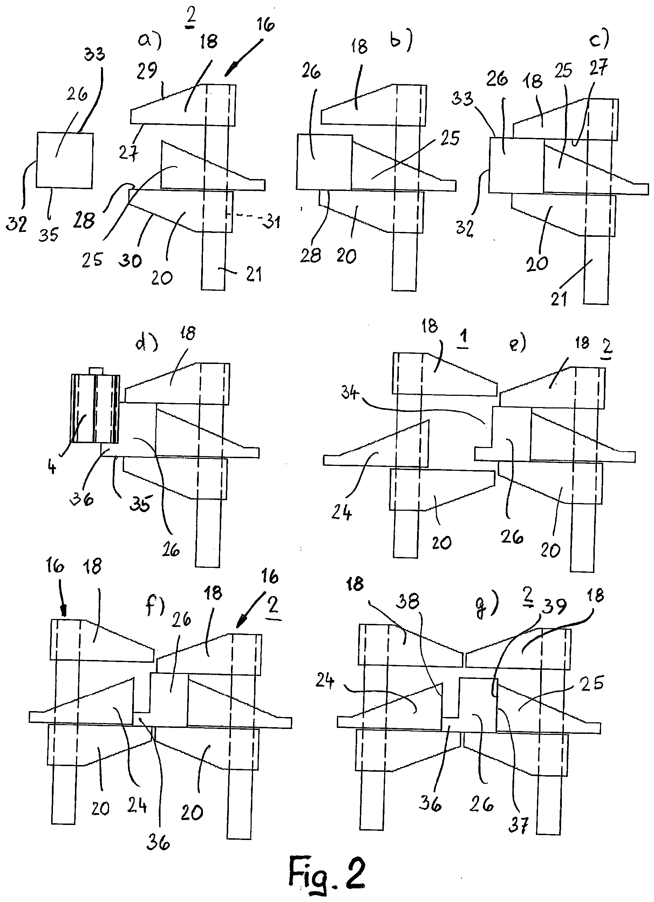

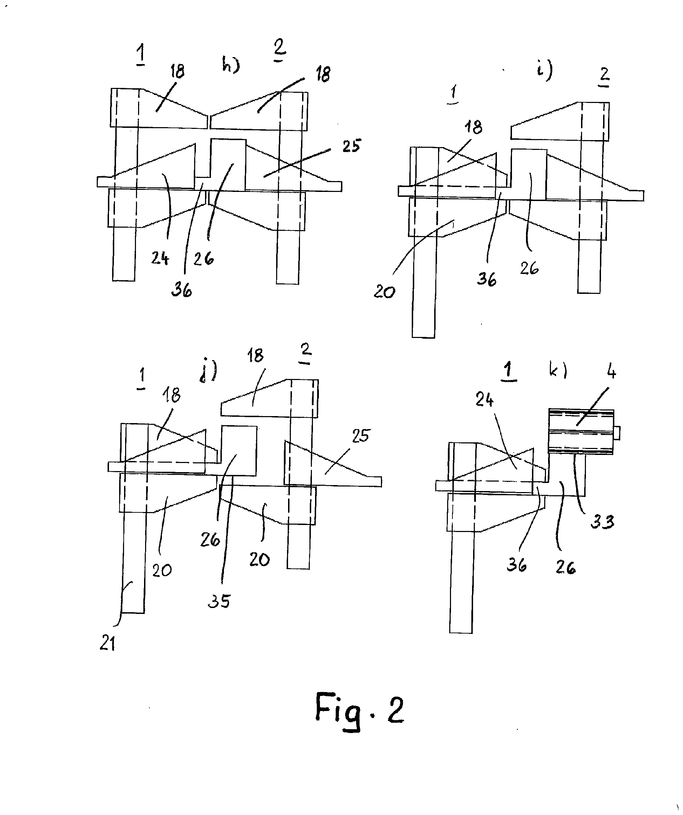

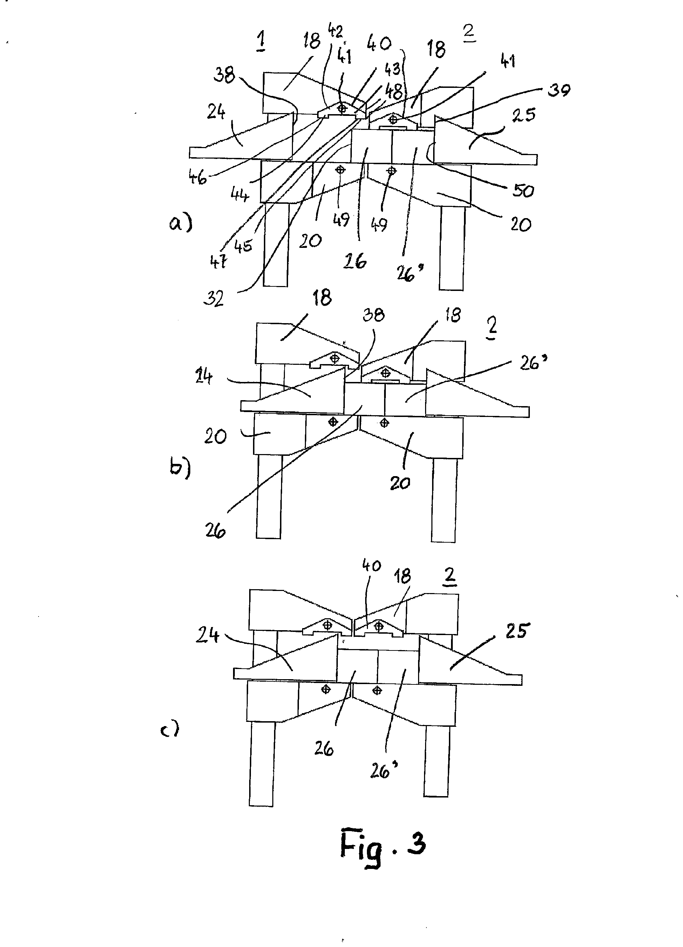

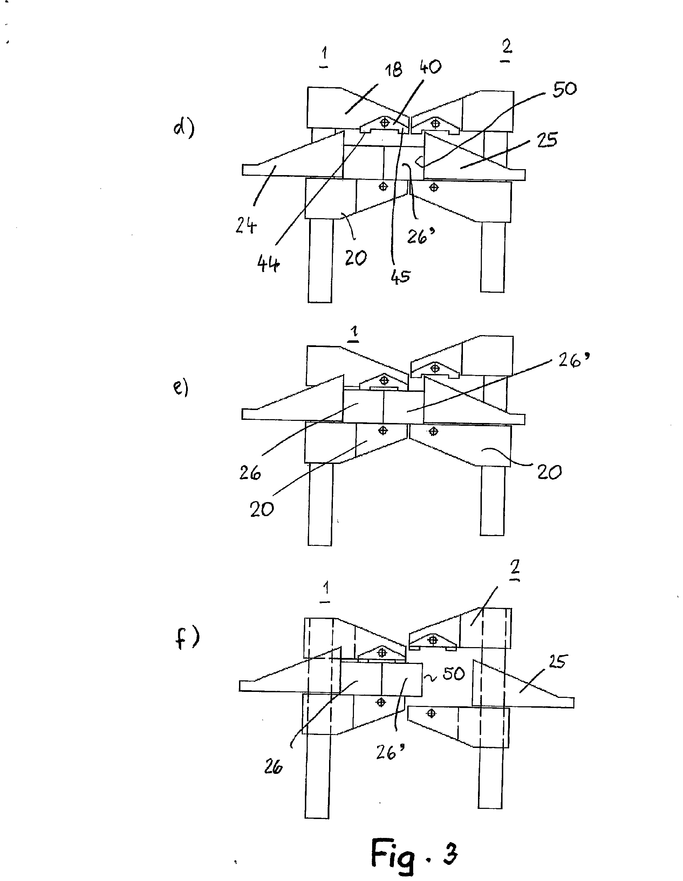

Wie aus den Fig. 2 und 3 hervorgeht, sitzen die Klemmbacken jedes Klemmbackenpaares 15, 16 auf wenigstens einer vertikalen Führung 21, die beispielsweise durch eine Achse gebildet wird.

Auf jedem Schlitten 13, 14 befinden sich zwei in Verschieberichtung 7 mit Abstand hintereinander liegende Träger 22, 23, in welche die Führungen 21 ragen.

Es besteht die Möglichkeit, die beiden Träger 22, 23 jedes Schlittens 13, 14 in Verschieberichtung 7 auf dem Schlitten 13, 14 relativ zueinander zu verstellen, wodurch der Abstand zwischen den Klemmbackenpaaren 15, 16 des jeweiligen Schlittens 13, 14 verändert werden kann, um beispielsweise eine Anpassung an unterschiedlich lange Werkstücke zu ermöglichen. Es können auch mehr als zwei Träger 22, 23 mit Klemmbackenpaaren 15, 16 auf einem Schlitten 13, 14 angeordnet sein, was später erläutert werden wird. Ebenso kann die Maschine mehr als zwei Schlitten 13, 14 aufweisen.

Es ist ferner möglich, die Träger 22, 23 zusätzlich oder auch nur ausschließlich quer zur Verschieberichtung 7 zu verstellen.

Im Bereich seitlich der oberen und unteren Klemmbacken 17 bis 20 befinden sich jeweils beidseitig Anschläge 24, 25. Die Anschläge 24 bilden gemeinsam einen Anschlag 24' und die Anschläge 25 gemeinsam einen Anschlag 25'. Die Anschläge 24, 25 sind quer zur Verschieberichtung 7 der Schlitten 13, 14 verstellbar. Die Anschläge 24, 25 kommen an den zu bearbeitenden Werkstücken 26 zur Anlage, wie nachfolgend beschrieben ist.

Die Klemmbacken 17 bis 20 sind jeweils gleich ausgebildet, wobei die oberen und unteren Klemmbacken 17, 18 und 19, 20 spiegelbildlich zueinander angeordnet sind.

Wie beispielsweise aus Fig. 2a in Verbindung mit Fig. 1 hervorgeht, sind die Klemmbacken im Wesentlichen quaderförmig ausgebildet. Ihre einander zugewandten Seiten bilden ebene Spannflächen 27, 28. Die den Spannflächen 27, 28 gegenüberliegenden Außenseiten der Klemmbacken 17 bis 20 weisen jeweils ein Schrägflächen 29, 30 auf, die vorteilhaft eben sind. Sie erstrecken sich beispielsweise über mehr als die halbe Breite der Klemmbacken 17 bis 20.

Aufgrund der Schrägflächen 29, 30 nimmt die Dicke der Klemmbacken 17 bis 20 stetig in Richtung auf deren freies Ende ab.

Im nicht verjüngten Bereich der oberen Klemmbacke 17, 18 ist das obere Ende der Führung 21 befestigt, die sich durch eine Durchgangsöffnung 31 im nicht verjüngten Teil der jeweils unteren Klemmbacke 19, 20 erstreckt.

Anhand der Fig. 2 wird im Folgenden beschrieben, wie das zu bearbeitende Werkstück 26 umgespannt werden kann, indem es von der Klemmeinheit 2 an die Klemmeinheit 1 übergeben wird, ohne dass das Werkstück 26 zu irgendeinem Zeitpunkt freigegeben wird. In dieser Darstellung sind lediglich die Klemmbacken 18, 20 der Klemmeinheiten 1, 2 sichtbar. Die anderen Klemmbacken 17, 19 liegen deckungsgleich hinter den Klemmbacken 18, 20. Wenn darum im Folgenden von den Klemmbacken 18 und 20 die Rede ist, sind selbstverständlich auch die Klemmbacken 17 und 19 gemeint, die in der Ansicht gemäß Fig. 2 nicht sichtbar sind.

Das parallel zur Verschieberichtung 7 liegende Werkstück 26 ist länglich ausgebildet und hat viereckigen, im Ausführungsbeispiel quadratischen Querschnitt. Dieses Werkstück 26 muss beispielsweise an seiner einen Längsseite 32 und an seiner Oberseite 33 mit dem Werkzeug 4 bearbeitet werden.

Solche Werkstücke 26 werden beispielsweise im Fenster- oder Möbelbau eingesetzt und sind verhältnismäßig schmal ausgebildet. Damit die entsprechenden Längsseiten 32, 33 des Werkstückes 26 bearbeitet werden können, ist ein Umspannvorgang notwendig, damit die entsprechende zu bearbeitende Seite des Werkstückes 26 freiliegt und vom Werkzeug 4 bearbeitet werden kann.

Fig. 2a zeigt, dass sich das unbearbeitete Werkstück 26 zunächst im Bereich neben der Klemmeinheit 2 befindet.

In der Ausgangsstellung sind die Klemmbacken 18 und 20 der Klemmeinheit 2 so weit hochgefahren, dass das unbearbeitete Werkstück 26 zwischen die Klemmbacken 18, 20 quer zur Verschieberichtung 7 bewegt werden kann.

Der Anschlag 25, der quer zur Verschieberichtung 7 verstellbar ist, wird so eingestellt, dass das Werkstück 26 über eine möglichst große Breite eingespannt ist, so dass während der Bearbeitung durch das Werkzeug 4 eine sichere Einspannung gewährleistet ist. Der Anschlag 25 ist so eingestellt, dass die Längsseite 32 des Werkstückes 26 durch das Werkzeug 4 einwandfrei bearbeitet werden kann.

Wie aus Fig. 2b hervorgeht, wird das Werkstück 26 so weit zwischen die Klemmbacken 18, 20 bewegt, bis es am Anschlag 25 anliegt. Das Werkstück 26 liegt beispielhaft auf der Spannfläche 28 der unteren Klemmbacke 20 auf, während die obere Klemmbacke 18 noch Abstand vom Werkstück 26 hat.

Sobald das Werkstück 26 am Anschlag 25 anliegt, wird die obere Klemmbacke 18 längs der Führung 21 nach unten verstellt, bis ihre Spannfläche 27 auf der Oberseite 33 des Werkstückes 26 aufliegt. Die Spannkraft ist so hoch, dass das zwischen den Klemmbacken 18, 20 eingespannte Werkstück 26 während der Bearbeitung durch das Werkzeug 4 sich nicht verschieben kann.

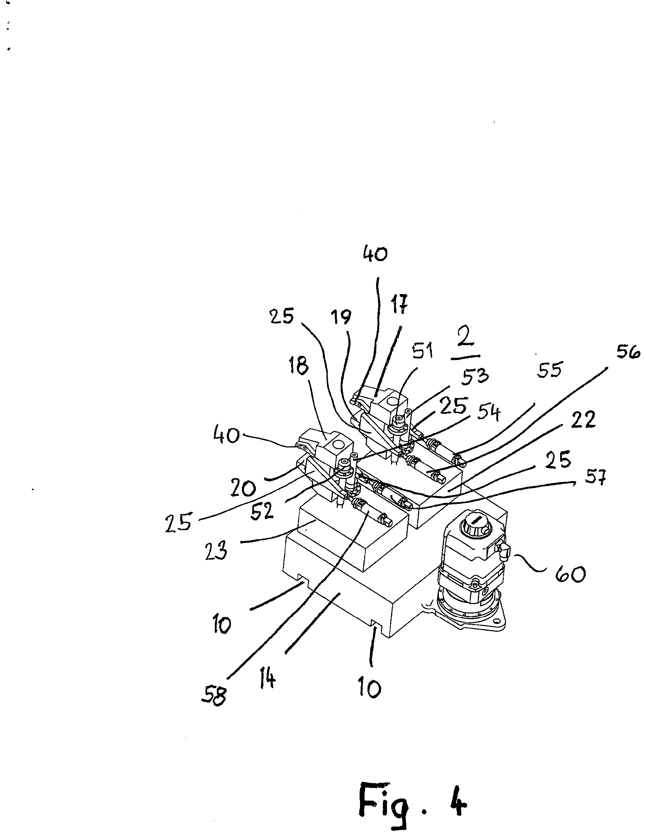

Zur Vertikalverstellung der Klemmbacken 17 bis 20 sind Antriebe 51 bis 54 (Fig. 4) vorgesehen, von denen die Antriebe 51, 52 für die oberen Klemmbacken 17, 18 und die Antriebe 53, 54 für die unteren Klemmbacken 19, 20 vorgesehen sind. Die Antriebe 51 bis 54 sind beispielhaft elektromotorisch angetriebene Mutter-Spindeltriebe, mit denen die notwendige Spannkraft aufgebracht werden kann. Es können auch pneumatisch betätigte Zylinder-. antriebe eingesetzt werden.

Wie aus Fig. 2c hervorgeht, ist das Werkstück 26 über mehr als die halbe Breite zwischen den Klemmbacken 18, 20 eingespannt. Der Überstand des Werkstückes 26 über die Klemmbacken 18, 20 ist so gewählt, dass im nachfolgenden Bearbeitungsprozess das Werkzeug 4 die erforderliche Bearbeitung an der Längsseite 32 des Werkstückes 26 vornehmen kann.

Dieser Verfahrensschritt ist in Fig. 2d dargestellt. Das Werkzeug 4 ist so positioniert, dass es die Längsseite 32 bearbeiten kann. Das eingespannte Werkstück 26 wird mit dem Schlitten 14 an dem um eine vertikale Achse rotierenden Werkzeug 4 in Verschieberichtung 7 vorbeigeführt. Hierbei wird die Längsseite 32 des Werkstückes 26 entsprechend bearbeitet, beispielsweise profiliert. Beispielhaft ist das Werkzeug 4 so ausgebildet, dass es an der Längsseite 32 des Werkstückes 26 eine zur Oberseite 33 offene Vertiefung 34 (Falz) erzeugt. Sie wird in Richtung auf die Werkstückunterseite 35 durch einen Steg 36 begrenzt.

Da am Werkstück 26 auch die Oberseite 33 bearbeitet werden muss, auf dieser jedoch die oberen Klemmbacken 18 aufliegen, wird das Werkstück 26 der Klemmeinheit 1 übergeben.

Hierzu kann der Schlitten 14 der Klemmeinheit 2 gegebenenfalls mit Versatz in Verstellrichtung 7 neben den Schlitten 13 der Klemmeinheit 1 gefahren werden, der sich in der in Fig. 1 dargestellten Ausgangsstellung befindet. Es ist aber auch möglich, den Schlitten 13 aus der Ausgangsstellung gemäß Fig. 1 in Richtung auf den Schlitten 14 zu verfahren, so dass beide Schlitten 13, 14, nachdem die Längsseite 32 des Werkstückes 26 bearbeitet worden ist, nebeneinander liegen. Schließlich ist es auch möglich, dass beide Schlitten 13, 14 sich in Richtung zueinander so bewegen, dass sie in einer Übergabestellung nebeneinander liegen, wenn das Werkstück 26 an seiner Längsseite 32 durch das Werkzeug 4 bearbeitet worden ist.

Fig. 2e zeigt die Klemmbacken 18, 20 der beiden nebeneinander liegenden Klemmeinheiten 1, 2. Die Klemmbacken 18, 20 der Klemmeinheit 1 sind auseinandergefahren. Die Klemmbacken 18, 20 der Klemmeinheit 2 halten das an der einen Längsseite 32 bearbeitete Werkstück 26 fest gespannt.

Der Anschlag 24 befindet sich noch in einer zurückgezogenen Lage. Er wird, wie ein Vergleich der Fig. 2e und 2f zeigt, quer zur Verschieberichtung 7 so weit verschoben, dass er am Steg 36 des Werkstückes 26 anliegt.

Die unteren Klemmbacken 20 werden so weit angehoben, dass sie an der Unterseite 35 des Werkstückes 26 anliegen. Die oberen Klemmbacken 18 der Klemmeinheit 1 befinden sich noch in der angehobenen Stellung, so dass sie nicht in Kontakt mit dem Werkstück 26 kommen.

Während des Anlegens der unteren Klemmbacken 20 und des Anschlages 24 an das Werkstück 26 ist dieses weiterhin durch die oberen und unteren Klemmbacken 18, 20 der Klemmeinheit 2 fest eingespannt.

Für die Übergabe des Werkstückes 26 von der Klemmeinheit 2 zur Klemmeinheit 1 wird das Werkstück 26 zwischen den Anschlägen 24 und 25 fest eingespannt. Der Anschlag 24 liegt hierbei an der Stirnseite des Steges 36 und der Anschlag 25 an der Längsseite 37 des Werkstückes 26 an. Beide Anschläge 24, 25 haben ebene, einander zugewandte Spannflächen 38, 39, die unter entsprechend hoher Kraftbeaufschlagung flächig am Werkstück 26 anliegen. Die Höhe der Spannflächen 38, entspricht in Etwa der Höhe des Werkstückes 26. Der Spanndruck wird vom Anschlag 24 der Klemmeinheit 1 erzeugt, der das Werkstück 26 gegen den Anschlag 25 drückt.

Zur Betätigung der Anschläge 25 sind Antriebe 55 bis 58 vorgesehen (Fig. 4), die auf den Trägern 22, 23 angeordnet sind. Wie Fig. 4 zeigt, sind im Ausführungsbeispiel die Anschläge 25 jeweils beiderseits der unteren und oberen Klemmbacken 17 bis 20 vorgesehen. Die Antriebe 25 können beispielsweise elektromotorische Linearantriebe oder Pneumatikantriebe sein.

Entsprechende Antriebe sind auch in der Klemmeinheit 1 vorgesehen.

Sobald das teilweise bearbeitete Werkstück 26 zwischen den Anschlägen 24, 25 fest eingespannt ist, werden die oberen Klemmbacken 18 der Klemmeinheit 2 angehoben, so dass sie vom Werkstück 26 freikommen (Fig. 2g), das auf den unteren Klemmbacken 20 der Klemmeinheit 1, 2 aufliegt.

Bei angehobenen oberen Klemmbacken 18 wird das Werkstück 26 mittels der beiden Anschläge 24, 25 quer zur Verschieberichtung 7 in der Darstellung nach rechts so weit verschoben, dass beim Absenken die oberen Klemmbacken 18 der Klemmeinheit 1 auf die Oberseite des Steges 36 des Werkstückes 26 gelangen (Fig. 2i). Damit wird das Werkstück 26 im Bereich des Steges 36 zwischen den oberen und unteren Klemmbacken 18, 20 der Klemmeinheit 1 fest eingespannt. Um eine sichere Spannung zu gewährleisten, wird das Werkstück 26 mittels der Anschläge 24, 25 so positioniert, dass die oberen Klemmbacken 18 der Klemmeinheit 1 den Steg 36 über eine möglichst große Breite spannen können.

Sobald die Klemmbacken 18, 20 der Klemmeinheit 1 das Werkstück 26 am Steg 36 gespannt haben, werden der Anschlag 25 quer zur Verschieberichtung 7 weggefahren und die unteren Klemmbacken 20 der Klemmeinheit 2 abgesenkt. Dadurch werden beim Verfahren der Klemmeinheiten 1 oder 2 Schleifspuren am Werkstück 26 durch die Klemmbacken 18, 20 der Klemmeinheit 2 vermieden.

Nunmehr kann die Klemmeinheit 1 mit dem eingespannten teilbearbeiteten Werkstück 26 auf der Führungsbahn 6 zum Werkzeug 4 gefahren werden, das so gedreht worden ist, dass es um eine horizontale Achse drehbar angetrieben wird (Fig. 2k). Mit diesem Werkzeug 4 kann beim Verfahren der Klemmeinheit 1 auf der Führungsbahn 6 die Oberseite 33 des Werkstückes 26 bearbeitet werden.

Während dieses Bearbeitungsschrittes liegt vorteilhaft auch der Anschlag 24 der Klemmeinheit 1 an der Stirnseite des Steges 36 des Werkstückes 26 an, so dass das Werkstück optimal während des Bearbeitungsvorganges durch das Werkzeug 4 eingespannt und gehalten wird.

Bei dem beschriebenen Umspannvorgang des Werkstückes 26 von der Klemmeinheit 2 zur Klemmeinheit 1 wird das Werkstück 26 zu keinem Zeitpunkt freigegeben. Dadurch wird verhindert, dass das Werkstück beispielsweise durch Eigenspannungen in sich verbogen oder verdreht wird, wie dies der Fall wäre, wenn das Werkstück während des Umspannprozesses freigegeben würde. Durch den beschriebenen Umspannvorgang ergeben sich sehr maßhaltige Werkstücke nach dem Bearbeitungsvorgang.

Während mit dem horizontal liegenden Werkzeug 4 die Werkstückoberseite 33 beim Durchlauf des Werkstückes 26 bearbeitet wird, kann die andere Klemmeinheit 2 zurückgefahren werden, so dass während der Fertigbearbeitung des Werkstückes das nächste Werkstück zwischen die Klemmbacken 18, 20 der Klemmeinheit 2 in der beschriebenen Weise eingespannt werden kann.

Mit dem Anschlag 25 kann die Einspanntiefe so gewählt werden, dass das Werkstück 26 möglichst weit von den Klemmbacken 18, 20 übergriffen wird, so dass ein sicherer Halt des Werkstückes während seiner Bearbeitung gewährleistet ist. Je größer die Einspanntiefe ist, desto größer ist auch die Auflage- bzw. Klemmfläche für die Klemmbacken. Es kann daher mit hoher Klemmkraft gearbeitet werden, ohne dass es zu Eindruckmarken der Klemmbacken am Werkstück kommt.

Da im beschriebenen Ausführungsbeispiel die beiden Klemmeinheiten 1, 2 nicht quer zur Verschieberichtung 7 verstellbar sind, wird die Einspanntiefe durch den positionierbaren Anschlag 25 der Klemmeinheit 2 bestimmt. Mit diesem Anschlag 25 wird auch die Einspanntiefe in der Klemmeinheit 1 festgelegt, indem er unter Wirkung des Gegendrucks von Anschlag das Werkstück in die erforderliche Lage positioniert.

Vorteilhaft ist die Klemmeinheit 1 mit einem (nicht dargestellten) Schieber versehen, mit dem das Werkstück 26 nach Beendigung seiner Bearbeitung quer zur Verschieberichtung 7 von der Klemmeinheit 1 abgeschoben werden kann, so dass diese zur Aufnahme des folgenden Werkstückes wieder zur Verfügung steht.

Als Schieber kann aber auch der Anschlag 24 eingesetzt werden. In diesem Falle kommt ihm eine Doppelfunktion zu, denn er kann in der beschriebenen Weise auch zur horizontalen Klemmung des Werkstückes 26 eingesetzt werden.

Bei der beschriebenen Verfahrensweise wird der Steg 36 des Werkstückes 26 von oben durch die oberen Klemmbacken 18 der Klemmeinheit 1 gespannt, weil der Steg 36 im Bereich der Werkstückunterseite 35 vorgesehen ist.

Im Verfahrensschritt 2d können das Werkzeug 4 bzw. das eingespannte Werkstück 26 so zueinander positioniert sein, dass sich der Steg 36 an der Werkstückoberseite 33 befindet. In diesem Falle ist die durch das Werkzeug 4 hergestellte Vertiefung 34 an der Längsseite 32 des Werkstückes 26 nicht zur Oberseite, sondern zur Unterseite 35 offen. In diesem Fall werden die unteren Klemmbacken nach oben längs der Führung 21 verstellt und bilden eine Auflagefläche für das Werkstück, die im Vergleich zur Auflagefläche der ersten Klemmeinheit in vertikaler Richtung entsprechend der den Falz begrenzenden Fläche nach oben versetzt ist. Es ist auch möglich, das Werkstück 26 mittels der unteren Klemmbacken 20 gegen die oberen Klemmbacken 18 zu spannen, die in diesem Fall die Bezugsfläche für die Einspannung bilden. Die unteren Klemmbacken 20 werden nach oben längs der Führung 21 so weit verschoben, bis sie an der Unterseite des Steges 36 anliegen.

Da vorzugsweise beide Klemmeinheiten 1, 2 mit den in Höhenrichtung verstellbaren unteren Klemmbacken 19, 20 versehen sind, können die Werkstücke 26 flexibel von unten oder von oben am Steg 36 geklemmt werden.

Bei der horizontalen Klemmung des Werkstückes 26 (Fig. 2f bis 2h) liegt der Anschlag 24 der Klemmeinheit 2 an der Stirnseite des Steges 36 an, der an der vorprofilierten Seite 32 des Werkstückes 26 vorgesehen ist. Damit der Anschlag 24 die vorprofilierte Seite des Werkstückes 26 nicht beschädigt, ist die Anlageseite des Anschlages 24 vorteilhaft mit einer weichen Auflage versehen, die beispielsweise aus Gummi oder aus Filz bestehen kann.

Es ist auch möglich, dass der verschiebbare Anschlag 24 in der Klemmeinheit 1, der im Ausführungsbeispiel als Spanndruckelement und zur Aufbringung der Spannkraft dient, als Positionieranschlag und dafür der Gegenanschlag 25 für den Druckaufbau bei der horizontalen Klemmung in der Klemmeinheit 2 angeordnet ist.

Schließlich ist es möglich, die beiden Anschläge 24, 25 im Bereich außerhalb der Schlitten 13, 14 in einem Übergabebereich vorzusehen, in dem die Übergabe des Werkstückes 26 von der Klemmeinheit 2 zur Klemmeinheit 1 vorgenommen wird.

Bei der beschriebenen Verfahrensweise bildet die jeweils untere Klemmbacke 19, 20 die Bezugsfläche für die Bearbeitung des Werkstückes 26. Die Klemmkraft beim Spannvorgang wird dann durch die obere Klemmbacke 17, 18 ausgeübt.

Möglich ist aber auch, dass die oberen Klemmbacken 17, 18 die Bezugsfläche für die Bearbeitung des Werkstückes 26 bilden. In diesem Falle werden die unteren Klemmbacken 19, 20 für den Spannvorgang eingesetzt, indem diese von unten nach oben verstellt werden.

Die Spannflächen 27, 28 der Klemmbacken 17 bis 20 und die Spannflächen 38, 39 der Anschläge 24, 25 (Fig. 2g) liegen rechtwinklig zueinander. Dies ist bei der Herstellung von Fensterrahmenteilen aus den Werkstücken 26 die Regel.

Je nach dem aus dem Werkstück 26 herzustellenden Teil können die Spannflächen 27, 28, 38, 39 auch schräg zueinander liegen, wenn die entsprechenden Gegenflächen am Werkstück 26 in entsprechender Weise schräg zueinander vorgesehen sind. Die Klemmbacken 17 bis 20 und die Anschläge 24, 25 sind dann mit entsprechend schräg liegenden Spannflächen versehen.

Beim beschriebenen Ausführungsbeispiel sind die Klemmbackenpaare 15, 16 auf den Schlitten 13, 14 in einem vorgegebenen Abstand zueinander, bezogen auf die Verschieberichtung 7, angeordnet.

Sollen allerdings unterschiedlich lange Werkstücke 26 bearbeitet werden, ist es vorteilhaft, wenn die Klemmbackenpaare 15, 16 auf den Schlitten 13, 14 in Verschieberichtung 7 verstellbar sind, so dass der Abstand der Klemmbackenpaare 15, 16 auf dem jeweiligen Schlitten 13, 14 verändert werden kann. Dadurch wird erreicht, dass auch unterschiedlich lange Werkstücke 26 zuverlässig geklemmt werden können. Es ist auch möglich, dass die Träger 22 und 23 direkt mit einem jeweiligen Antrieb auf den Führungen 5 und 6 verfahren werden. In diesem Fall kann auf die Schlitten 13 und 14 verzichtet werden.

Ebenso ist es möglich, dass die Klemmbacken 17 bis 20 der beiden Klemmeinheiten 1, 2 quer zur Verschieberichtung 7 verstellbar angeordnet sind. Dann kann die Lage der Klemmbacken zusätzlich im Hinblick auf die am Werkstück 26 vorzunehmende Bearbeitung optimiert werden.

Im beschriebenen und dargestellten Ausführungsbeispiel sind die Klemmbacken 17 bis 20 quer zur Verschieberichtung 7 nicht verstellbar.

Anhand von Fig. 3 wird beispielhaft beschrieben, wie mit den beiden Klemmeinheiten 1, 2 die Fertigung von Doppel- bzw. Mehrfachteilen in einer Spannung mit einer seitlichen Übergabe zwischen den Klemmeinheiten 1, 2 möglich ist. Hierbei werden beispielhaft zwei aneinander liegende längliche Werkstücke 26, 26' mit jeweils einem Klemmelement 40 der oberen Klemmbacken 18 geklemmt. Im Unterschied zur vorigen Ausführungsform liegen die oberen Klemmbacken 18 nicht unmittelbar auf dem einzuspannenden Werkstück 26, 26' auf, sondern mit den Klemmelementen 40, die als zweiarmige Hebel ausgebildet und an den einander gegenüberliegenden Seitenflächen jeder oberen Klemmbacke 17, 18 schwenkbar gelagert sind. Die Schwenkachsen 41 der Klemmelemente 40 liegen parallel zur Verschieberichtung 7.

An den freien Enden der Hebel 42, 43 der Klemmelemente 40 befinden sich schmale Ansätze 44, 45, die in Richtung auf das einzuspannende Werkstück 26, 26' bzw. die untere Klemmbacken 19, 20 vorstehen und jeweils eine ebene, als Spannfläche wirkende Stirnseite 46, 47 haben.

Jede obere Klemmbacke 17, 18 ist mit zwei solcher Klemmelemente 40 versehen, die an den einander gegenüberliegenden Seitenflächen der Klemmbacken liegen. Vorteilhaft haben die beiden Klemmelemente 40 jeder Klemmbacke eine gemeinsame Schwenkachse 41. Von Vorteil ist, wenn die Klemmelemente 40 an der jeweiligen Außenseite bzw. Seitenfläche der oberen Klemmbacke 17, 18 anliegen.

Zum Spannen reicht es aus, wenn die oberen Klemmbacken 17, 18 nur an einer Seite mit dem Klemmelement 40 versehen sind.

Die Klemmelemente 40 sind so an den oberen Klemmbacken 17, 18 schwenkbar gelagert, dass zumindest ihre Ansätze 44, 45 über die Klemmbacken in Richtung auf die zu spannenden Werkstücke 26, 26' vorstehen. Dann lassen sich die Werkstücke einwandfrei einspannen.

Die Klemmelemente 40 sind außerdem so angeordnet, dass sie am freien Ende der Klemmbacken 17, 18 nicht über die Stirnseite 48 der Klemmbacken 17, 18 vorstehen, sondern in etwa mit ihr fluchten.

Wie Fig. 3 zeigt, sind die unteren Klemmbacken 19, 20 mit Durchtrittsöffnungen 49 versehen, durch welche die Schwenkachse 41 für den Fall gesteckt werden kann, dass an den unteren Klemmbacken 19, 20 die Klemmelemente 40 angebracht werden. Dies ist dann der Fall, wenn mit den unteren Klemmbacken 19, 20 die Klemm- bzw. Spannkraft aufgebracht wird. Im dargestellten Ausführungsbeispiel wird die Klemmkraft von den oberen Klemmbacken 17, 18 erzeugt, so dass an ihnen die Klemmelemente 40 gelagert sind.

Wie Fig. 3a zeigt, werden zunächst die länglichen, mit ihren Längsseiten aneinander liegenden Werkstücke 26, 26' in die Klemmeinheit 2 eingebracht. Die oberen Klemmbacken 18 sind so weit angehoben, dass die Werkstücke 26, 26' auf den unteren Klemmbacken 20 aufliegend zuverlässig in die Klemmeinheit 2 geschoben werden können. Der Anschlag 25 ist so eingestellt, dass die zu bearbeitende Längsseite 32 des Werkstückes 26 über die Klemmbacken 18, 20 quer zur Verschieberichtung 7 so weit vorsteht, dass sie durch das Werkzeug 4 bearbeitet werden kann, wie dies für die vorige Ausführungsform erläutert worden ist.

Das Werkstück 26' liegt mit seiner vom Werkstück 26 abgewandten Längsseite 50 an der Spannfläche 39 des Anschlages 25 an.

Sobald die Werkstücke 26, 26' positioniert sind, werden die oberen Klemmbacken 17, 18 abgesenkt, wobei die Klemmelemente 40 mit ihren Ansätzen 44, 45 auf die beiden Werkstücke 26, 26' drücken und diese in Verbindung mit den unteren Klemmbacken 19, 20 fest einspannen.

Die Klemmeinheit 2 wird dann mit ihren beiden eingespannten Werkstücken 26, 26' mit Hilfe des Schlittens 14 am Werkzeug 4 vorbeigefahren, mit dem an der Längsseite 32 des Werkstückes 26 die Profilierung vorgenommen wird.

Damit auch die Längsseite 50 des Werkstückes 26' bearbeitet werden kann, werden die beiden Werkstücke 26, 26' von der Klemmeinheit 2 an die Klemmeinheit 1 übergeben. Entsprechend der vorigen Ausführungsform erfolgt die Übergabe dann, wenn die beiden Klemmeinheiten 1, 2 nebeneinander liegen. Vor der Übergabe der Werkstücke 26, 26' sind die oberen Klemmbacken 17, 18 der Klemmeinheit 1 so weit angehoben und die unteren Klemmbacken 19, 20 gegebenenfalls so weit abgesenkt, dass das über die Klemmeinheit 2 quer zur Verschieberichtung 7 überstehende Ende des Werkstückes 26 zwischen die Klemmbacken 17 bis 20 der Klemmeinheit 1 gelangen kann.

Anschließend wird der Anschlag 24 quer zur Verschieberichtung 7 so weit verschoben, bis seine Spannfläche 38 an der bearbeiteten Längsseite 32 des Werkstückes 26 zur Anlage kommt (Fig. 3b). Die Werkstücke 26, 26' sind hierbei noch durch die Klemmbacken 17 bis 20 der Klemmeinheit 2 fest eingespannt.

Mit dem Anschlag 24 wird die Spannkraft aufgebracht, wodurch die beiden aneinander liegenden und auf den unteren Klemmbacken 19, 20 der beiden Klemmeinheiten 1 und 2 aufliegenden Werkstücke 26, 26' horizontal eingespannt werden.

Anschließend werden die oberen Spannbacken 17, 18 der Klemmeinheit 2 angehoben (Fig. 3c), so dass die Klemmelemente 40 von den beiden Werkstücken 26, 26' freikommen.

Im nächsten Schritt werden die beiden Anschläge 24, 25 quer zur Verschieberichtung 7 so weit verschoben (Fig. 3d), dass das Werkstück 26' mit seiner noch zu bearbeitenden Längsseite 50 quer zur Verschieberichtung 7 über die Klemmbacken 17 bis 20 der Klemmeinheit 1 vorsteht. Vorteilhaft wird dabei der Anschlag 25 quer zur Verschiebrichtung positioniert, während der Anschlag 24 als Spanndruckelement unter Kraftwirkung an dem Werkstück 26 anliegt und das Werkstückpaket 26, 26' stets gegen den Anschlag 25 drückt und damit spannt. Die Spannkraft des Anschlags 24 kann vorteilhaft über Pneumatikzylinder aufgebracht werden. Bei einer solchen Ausführung ist nur für den Anschlag 25 ein Positionierantrieb erforderlich. Es können aber auch beide Anschläge 24, 25 mit Positionierantrieben ausgestattet sein, die beim Querverschieben der Werkstücke 26, 26' synchron verfahren werden und somit die Werkstücke 26, 26' stets fest eingespannt halten.

Nunmehr werden die oberen Klemmbacken 17, 18 der Klemmeinheit 1 abgesenkt, bis deren Klemmelemente 40 mit ihren Ansätzen 44, 45 auf den Werkstücken 26, 26' aufliegen und diese gegen die unteren Klemmbacken 19, 20 der Klemmeinheit 1 spannen (Fig. 3e).

Anschließend werden die Klemmbacken 17 bis 20 der Klemmeinheit 2 so weit auseinander gefahren, dass diese ohne Berührung mit dem Werkstück 26' weggefahren werden kann, um das nachfolgend zu bearbeitende Werkstückpaar aufzunehmen. Mit dem Auseinanderfahren der Klemmbacken 17 bis 20 wird auch der Anschlag 25 der Klemmeinheit 2 quer zur Verschieberichtung 7 zurückgefahren.

Die Klemmeinheit 1 mit dem eingespannten Werkstückpaar 26, 26' wird beispielsweise nunmehr am Werkzeug 4 vorbeigefahren, wobei die Längsseite 50 des Werkstückes 26' bearbeitet wird.

Auch bei dieser Verfahrensweise wird das Werkstückpaar 26, 26' horizontal und vertikal eingespannt, wobei die Übergabe des Werkstückpaares 26, 26' von der Klemmeinheit 2 an die Klemmeinheit 1 derart erfolgt, dass das Werkstückpaar jederzeit fest eingespannt ist.

Der Einsatz der schwenkbaren Klemmelemente 40 hat den Vorteil, dass Höhentoleranzen der Werkstücke 26, 26' ausgeglichen werden können. Außerdem wird infolge der zweiarmigen Ausbildung der Klemmelemente erreicht, dass die Ansätze 44, 45 mit annähernd der halben zur Verfügung stehenden Klemmkraft auf die beiden Werkstücke 26, 26' drücken.

Grundsätzlich ist es aber auch möglich, wenn die oberen Klemmbacken 17, 18 eine Ausbildung entsprechend der vorigen Ausführungsform haben. Auch dann lassen sich die aneinander- und nebeneinanderliegenden Werkstücke 26, 26' sicher einspannen.

Im dargestellten Ausführungsbeispiel liegen die beiden Werkstücke 26, 26' nebeneinander und erstrecken sich in Verschieberichtung 7. Es ist möglich, dass die Werkstücke nicht neben-, sondern übereinander liegen. Auch dann können zwei Werkstücke gleichzeitig eingespannt und von der einen Klemmeinheit an die andere Klemmeinheit übergeben werden.

Weiter ist es möglich, beispielsweise auf die Werkstücke 26, 26' zwei weitere Werkstücke aufzulegen, so dass ein Viererpaket gleichzeitig eingespannt und mit den entsprechenden Werkzeugen bearbeitet werden kann. An der Arbeitsweise, wie sie anhand des Doppelpaketes beschrieben ist, ändert sich hierbei nichts.

Auf diese Weise können auch beispielsweise acht Werkstücke gleichzeitig eingespannt und bearbeitet werden.

An den Werkstücken kann, wie anhand von Fig. 3 erläutert worden ist, die jeweilige Außenseite des Doppelteilepaketes durch das entsprechende Werkzeug bearbeitet werden.

Bei sämtlichen Ausführungsformen können die Werkstücke 26, 26' in Verschieberichtung 7 über die Klemmeinheiten 1, 2 vorstehen. Dadurch ist es möglich, an den Stirnseiten der Werkstücke auch eine Querbearbeitung vorzunehmen. Dazu ist es erforderlich die Schlitten 13, 14 oder die Träger 20, 22 beim Einspannen der Werkstücke 26, 26' so in Längsrichtung zu positionieren, dass zumindest an einer Seite die Stirnseiten soweit über die Klemmbackenpaare 15, 16 überstehen, dass das Werkzeug 4 genug Freiraum hat, um die Stirnseiten zu bearbeiten.

An den Längsseiten 32, 37, 50 der Werkstücke 26, 26' können beispielsweise auch Bohr- oder Fräsbearbeitungen ausgeführt werden.

Die Einspannung mehrerer Werkstücke 26, 26' hat insbesondere den Vorteil, dass eine gleichzeitige Endenbearbeitung der Werkstücke möglich ist. Die jeweilige Klemmeinheit 1, 2 steht still, während das Endenbearbeitungswerkzeug quer zur Verschieberichtung 7 an den Werkstücken vorbeifährt und deren Enden bearbeitet.

Die jeweilige Klemmeinheit 1, 2 und das Endenbearbeitungswerkzeug können eine Interpolationsbewegung ausführen, so dass die Werkstückenden schräg bearbeitet werden.

Bei den beschriebenen Ausführungsformen ist eine schwimmende Spannung der Werkstücke bei der Übergabe in die zweite Klemmeinheit möglich. Die unteren oder oberen Klemmbacken 17 bis 20 der zweiten Klemmeinheit legen sich ohne Aufbau des Spanndrucks an das Werkstück an, z.B. am Steg 34, und werden in dieser Position arretiert. Die jeweils andere Klemmbacke spannt dann das Werkstück in der beschriebenen Weise. Bei einer solchen Verfahrensweise ist die vertikale Werkstückposition in der zweiten Klemmeinheit unabhängig von der Bearbeitung und Bearbeitungsgenauigkeit in der ersten Klemmeinheit durch die Einspannung in der ersten Klemmeinheit festgelegt.

Die Klemmelemente 40 können auch bei Klemmeinheiten eingesetzt werden, die an schräg zueinander liegenden Werkstückflächen angreifen.

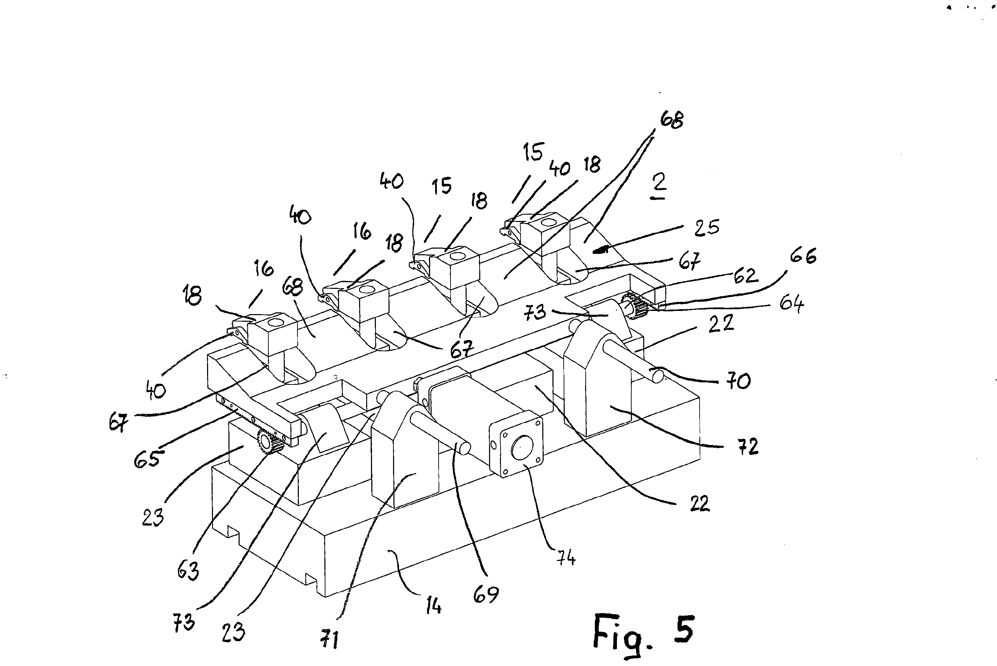

Fig. 5 zeigt beispielhaft eine weitere Ausführungsform einer Klemmeinheit 2. Sie ist mit vier in Verschieberichtung 7 mit Abstand hintereinander angeordneten Klemmbackenpaaren 15, 16 versehen, die gleich ausgebildet sind. An den oberen Klemmbacken 18 sind die Klemmelemente 40 schwenkbar gelagert. Diese Klemmbacken 18 haben somit eine Ausbildung entsprechend der in Fig. 3 dargestellten Ausführungsform.

Auf dem Schlitten 14 befinden sich Stützen 71, 72, die vom Schlitten 14 aufwärts ragen. In den Stützen 71, 72 sind quer zur Verschieberichtung sich erstreckende Führungen 69, 70 gelagert, an denen der Anschlag 25 befestigt damit quer zur Verschieberichtung verstellbar ist. Der Anschlag 25 erstreckt sich in Verschiebrichtung 7 über die Länge des Schlittens 14.

Im Bereich der Klemmbackenpaare 15, 16 ist der Anschlag 25 unterbrochen, so dass er relativ zu den Klemmbackenpaaren 15, 16 quer zur Verschieberichtung 7 verschoben werden kann.

Die Klemmbackenpaare ragen jeweils durch Durchtrittsöffnungen 67, die zur einen Längsseite 25 hin offen sind. Dadurch werden einzelne Anschlagfinger 68 gebildet, die seitlich jeweils neben den Klemmbackenpaaren 15, 16 vorgesehen sind.

Auf den Trägern 22, 23 ist jeweils ein Lagerbock 73 angeordnet, in denen eine parallel zur Verschieberichtung 7 sich erstreckende Welle 62 drehbar abgestützt ist. Auf deren beiden Enden sitzt drehfest jeweils ein Zahnrad 63, 64. Die beiden Zahnräder greifen in jeweils eine Zahnstange 65, 66 ein, die jeweils an den beiden Enden des Anschlages 25 vorgesehen ist und sich senkrecht zur Verschieberichtung 7 erstreckt.

Die Welle 62 mit den beiden Zahnrädern 63, 64 und die Zahnstangen 65, 66 bilden ein Zahnstangengetriebe 61, welches sichergestellt, dass der Anschlag 25 einwandfrei quer und parallel zur Verschieberichtung 7 verstellt werden kann. Dadurch werden die zu spannenden Werkstücke 26, 26' sauber eingespannt und können sich insbesondere nicht schräg stellen. Durch die Welle 62 wird eine Synchronisierung der beiden Zahnstangen 65, 66 erreicht, die sicherstellt, dass sich der Anschlag 25 gleichmäßig parallel verstellen lässt und er sich nicht schräg stellen kann. Dadurch ist gewährleistet, dass der Anschlag 25 nicht schräg auf das Werkstück drückt, wodurch es zu Bearbeitungsungenauigkeiten kommen könnte. Dieses Problem tritt insbesondere dann auf, wenn das Werkstück kürzer ist als der Anschlag 25.

Der Anschlag 25 ist mit einem Antrieb 74 verbunden, der sich quer zur Verschieberichtung 7 erstreckt und mit dem der Anschlag quer zur Verschieberichtung 7 verstellt werden kann. Im Ausführungsbeispiel ist der Antrieb 74 als Positionierachse beispielsweise ein elektromotorischer Linearantrieb. Im Falle des Anschlags 24, der lediglich zur Erzeugung des Spanndrucks so verstellt werden muss, dass er sich an das Werkstück 26, 26' anlegt, ist der Antrieb vorzugsweise ein Pneumatikzylinder.

## Patentansprüche

1. Verfahren zum Bearbeiten von länglichen Werkstücken (26, 26') aus Holz, Kunststoff und dergleichen, die zwischen wenigstens einer oberen und einer unteren Klemmbacke (17 bis 20) einer ersten Klemmeinheit (1) so eingespannt werden, dass wenigstens eine Seite (32) des Werkstückes (26, 26') bearbeitet werden kann, und mit einer zweiten Klemmeinheit (2), die wenigstens eine obere und eine untere Klemmbacke (17 bis 20) aufweist und der das Werkstück (26, 26') von der ersten Klemmeinheit (1) übergeben wird, das mit der zweiten Klemmeinheit (2) so eingespannt wird, dass eine weitere Bearbeitung am Werkstück (26, 26') vorgenommen werden kann,
**dadurch gekennzeichnet, dass** das Werkstück (26, 26') zur Übergabe zwischen den beiden Klemmeinheiten (1, 2) horizontal eingespannt wird, wobei das Werkstück (26, 26') bis zur horizontalen Einspannung noch durch die Klemmbacken (17 bis 20) zumindest der einen Klemmeinheit (1, 2) vertikal eingespannt ist, dass das Werkstück (26, 26') bei horizontaler Einspannung und gelöster Vertikalspannung quer zur Längsrichtung des Werkstücks (26, 26') verschoben und danach von den Klemmbacken (17 bis 20) der gleichen Klemmeinheit oder der das Werkstück (26, 26') aufnehmenden Klemmeinheit (1, 2) vertikal eingespannt wird und anschließend die horizontale Einspannung gelöst wird.

2. Verfahren nach Anspruch 1,
**dadurch gekennzeichnet, dass** zur horizontalen Einspannung des Werkstücks (26, 26') Anschläge (24, 25) vorgesehen sind, von denen wenigstens einer quer zur Längsrichtung des Werkstücks (26, 26') zur Einstellung der Einspanntiefe verstellbar, vorzugsweise positionierbar ist.

3. Verfahren nach Anspruch 2,
**dadurch gekennzeichnet, dass** mit dem anderen verstellbaren Anschlag (24) die Spannkraft erzeugt wird.

4. Verfahren nach einem der Ansprüche 1 bis 3,
**dadurch gekennzeichnet, dass** zumindest die eine, vorzugsweise beide Klemmeinheiten (1, 2) längs einer Führungsbahn (5, 6) verfahren werden.

5. Verfahren nach einem der Ansprüche 1 bis 4,
**dadurch gekennzeichnet, dass** zumindest die eine, vorzugsweise beide Klemmeinheiten (1, 2) zur Bearbeitung des Werkstücks (26, 26') an wenigstens einem Werkzeug (4) vorbeigefahren werden.

6. Verfahren nach einem der Ansprüche 1 bis 5, **dadurch gekennzeichnet, dass** die untere Klemmbacke (19, 20) zumindest der einen Klemmeinheit (1, 2) zur Erzeugung der Spannkraft in Höhenrichtung verstellbar ist.

7. Verfahren nach einem der Ansprüche 1 bis 6,
**dadurch gekennzeichnet, dass** am Werkstück (26, 26') ein in seiner Längsrichtung sich erstreckender Falz (34) mit dem Werkzeug (4) hergestellt wird, und dass das Werkstück (26, 26') mit der oberen Klemmbacke (17, 18) im Falz (34) an einem den Falz (34) begrenzenden Absatz (Steg) (36) gegen die untere Klemmbacke (19, 20) gespannt wird.

8. Verfahren nach einem der Ansprüche 1 bis 6,
**dadurch gekennzeichnet, dass** am Werkstück (26, 26') ein in seiner Längsrichtung sich erstreckender Falz (34) mit dem Werkzeug (4) hergestellt wird, und dass das Werkstück (26, 26') mit der unteren Klemmbacke (19, 20) im Falz (34) an einem den Falz (34) begrenzenden Absatz (36) gegen die obere Klemmbacke (17, 18) gespannt wird.

9. Verfahren zum Bearbeiten von länglichen Werkstücken (26, 26') aus Holz, Kunststoff und dergleichen, die zwischen wenigstens einer oberen und einer unteren Klemmbacke (17 bis 20) einer ersten Klemmeinheit (1) so eingespannt werden, dass wenigstens eine Seite (32) des Werkstückes (26, 26') bearbeitet werden kann, und mit einer zweiten Klemmeinheit (2), die wenigstens eine obere und eine untere Klemmbacke (17 bis 20) aufweist und der das erste Werkstück (26, 26') von der ersten Klemmeinheit (1) übergeben wird, das mit der zweiten Klemmeinheit (2) so eingespannt wird, dass eine weitere Bearbeitung am Werkstück (26, 26') vorgenommen werden kann, wobei wenigstens zwei Werkstücke (26, 26') als Werkstückpaket neben- und/oder aufeinanderliegend so in der ersten Klemmeinheit (1, 2) eingespannt werden, dass zumindest eine Seite (32) des einen Werkstückes (26) des Werkstückpaketes bearbeitet werden kann, **dadurch gekennzeichnet, dass** das Werkstückpaket anschließend bei vertikaler Einspannung horizontal eingespannt wird, und dass das so eingespannte Werkstückpaket nach Lösen der vertikalen Einspannung der zweiten Klemmeinheit (1, 2) so übergeben wird, dass nach der Einspannung des Werkstückpaketes mit den oberen und unteren Klemmbacken (17 bis 20) der zweiten Klemmeinheit (1, 2) und Lösen der horizontalen Einspannung wenigstens eine weitere Bearbeitung vorgenommen werden kann.

10. Verfahren zum Bearbeiten von länglichen Werkstücken (26, 26') aus Holz, Kunststoff und dergleichen, die zwischen wenigstens einer oberen und einer unteren Klemmbacke (17 bis 20) einer ersten Klemmeinheit (1) so eingespannt werden, dass wenigstens eine Seite (32) des Werkstückes (26, 26') bearbeitet werden kann, und mit einer zweiten Klemmeinheit (2), die wenigstens eine obere und eine untere Klemmbacke (17 bis 20) aufweist und der das erste Werkstück (26, 26') von der ersten Klemmeinheit (1) übergeben wird, das mit der zweiten Klemmeinheit (2) so eingespannt wird, dass eine weitere Bearbeitung am Werkstück (26, 26') vorgenommen werden kann,
wobei wenigstens zwei Werkstücke (26, 26') als Werkstückpaket neben- und/oder aufeinanderliegend so in der ersten Klemmeinheit (1, 2) eingespannt werden, dass zumindest eine Seite (32) des einen Werkstückes (26) des Werkstückpaketes bearbeitet werden kann, **dadurch gekennzeichnet, dass** das Werkstückpaket anschließend bei vertikaler Einspannung horizontal eingespannt wird, und dass das so eingespannte Werkstückpaket nach Lösen der vertikalen Einspannung quer zur Längsrichtung des Werkstückpaketes (26, 26') verschoben und danach von den Klemmbacken (17 bis 20) der gleichen Klemmeinheit vertikal eingespannt wird und anschließend die horizontale Einspannung gelöst wird.

11. Verfahren nach Anspruch 9,
**dadurch gekennzeichnet, dass** das Werkstückpaket bei horizontaler Einspannung bei der Übergabe von der einen zur anderen Klemmeinheit (1, 2) quer zur Längsrichtung der Werkstücke (26, 26') verschoben wird.

12. Maschine zur Bearbeitung von länglichen Werkstücken aus Holz,
Kunststoff und dergleichen, zur Durchführung des Verfahrens nach einem der Ansprüche 1 bis 11, mit wenigstens zwei Klemmeinheiten (1, 2), die auf parallel zueinander liegenden Führungsbahnen (5, 6) verfahrbar sind, obere und untere Klemmbacken (17 bis 20) aufweisen und in eine Übergabestellung verfahrbar sind, in der die Klemmeinheiten (1, 2) so nebeneinander angeordnet sind, dass die Werkstücke (26, 26') von der einen zur anderen Klemmeinheit (1, 2) übergebbar sind,
**dadurch gekennzeichnet, dass** zumindest die eine Klemmeinheit (1, 2) zur Einstellung der Einspanntiefe des Werkstückes (26, 26') wenigstens einen positionierbaren Anschlag (25) und die andere Klemmeinheit (1, 2) wenigstens ein Spanndruckelement (24) aufweist, mit dem das Werkstück (26, 26') während der Übergabe quer zu seiner Längsrichtung gegen den Anschlag (25) horizontal eingespannt sein kann.

13. Maschine nach Anspruch 12,
**dadurch gekennzeichnet, dass** die untere Klemmbacke (19, 20) zumindest der einen Klemmeinheit (1, 2) in Vertikalrichtung zur Erzeugung der Spannkraft verstellbar ist.

14. Maschine nach Anspruch 12 oder 13,
**dadurch gekennzeichnet, dass** die obere Klemmbacke (17, 18) als Bezugsfläche für die vertikale Einspannung des Werkstückes (26, 26') dienen und die untere Klemmbacke (19, 20) das Werkstück (26, 26') gegen die oberen Klemmbacken (17, 18) spannt.

15. Maschine nach einem der Ansprüche 12 bis 14,
**dadurch gekennzeichnet, dass** die obere oder untere Klemmbacke (17 bis 20) mit wenigstens einem wippenförmigen schwenkbaren Klemmelement (40) versehen ist.

## Claims

1. Method for machining elongated workpieces (26, 26') made of wood, plastic and the like, which are clamped between at least one upper and one lower clamping jaw (17 to 20) of a first clamping unit (1) in such a way that at least one side (32) of the workpiece (26, 26') can be machined, and comprising a second clamping unit (2) which has at least one upper and one lower clamping jaw (17 to 20) and to which the workpiece (26, 26') is transferred from the first clamping unit (1), which is clamped with the second clamping unit (2) in such a way that further machining can be carried out on the workpiece (26, 26'), **characterized in that** the workpiece (26, 26') is clamped horizontally for transfer between the two clamping units (1, 2), wherein the workpiece (26, 26') is still clamped vertically by the clamping jaws (17 to 20) of the at least one clamping unit (1, 2) until the horizontal clamping, that the workpiece (26, 26') is displaced transversely to the longitudinal direction of the workpiece (26, 26') when clamped horizontally and the vertical tension is released and thereafter by the clamping jaws (17 to 20) of the same clamping unit or the clamping unit (1, 2) holding the workpiece (26, 26') is clamped vertically and then the horizontal clamping is released.

2. Method according to Claim 1,
**characterized in that** for the horizontal clamping of the workpiece (26, 26') stops (24, 25) are provided, of which at least one is adjustable, preferably positionable, transversely to the longitudinal direction of the workpiece (26, 26') for adjusting the clamping depth.

3. Method according to Claim 2,
**characterized in that** the clamping force is generated with the other adjustable stop (24).

4. Method according to one of Claims 1 to 3, **characterized in that** at least one, preferably both clamping units (1, 2) are moved along a guide track (5, 6).

5. Method according to one of Claims 1 to 4, **characterized in that** at least one, preferably both clamping units (1, 2) are moved past at least one tool (4) for machining the workpiece (26, 26').

6. Method according to one of Claims 1 to 5, **characterized in that** the lower clamping jaw (19, 20) of at least the one clamping unit (1, 2) is adjustable in the height direction to generate the clamping force.

7. Method according to one of Claims 1 to 6, **characterized in that** a rebate (34) extending in its longitudinal direction is produced on the workpiece (26, 26') with the tool (4), and that the workpiece (26, 26') is clamped with the upper clamping jaw (17, 18) in the rebate (34) against the lower clamping jaw (19, 20) on a shoulder (web) (36) delimiting the rebate (34).

8. Method according to one of Claims 1 to 6, **characterized in that** a rebate (34) extending in its longitudinal direction is produced on the workpiece (26, 26') with the tool (4), and **in that** the workpiece (26, 26') is clamped with the lower clamping jaw (19, 20) in the rebate (34) against the upper clamping jaw (17, 18) at a shoulder (36) delimiting the rebate (34).

9. Method for machining elongated workpieces (26, 26') made of wood, plastic and the like, which are clamped between at least one upper and one lower clamping jaw (17 to 20) of a first clamping unit (1) in such a way that at least one side (32) of the workpiece (26, 26') can be machined, and comprising a second clamping unit (2) which has at least one upper and one lower clamping jaw (17 to 20) and to which the first workpiece (26, 26') is transferred from the first clamping unit (1), which is clamped with the second clamping unit (2) in such a way that a further machining can be carried out on the workpiece (26, 26') wherein at least two workpieces (26, 26') are clamped as a workpiece package next to and/or on top of one another in the first clamping unit (1, 2) in such a way that at least one side (32) of the one workpiece (26) of the workpiece package can be machined, **characterized in that** the workpiece package is then clamped horizontally with vertical clamping, and that the workpiece package clamped in this way is transferred to the second clamping unit (1, 2) after the vertical clamping has been released, so that after the workpiece package has been clamped with the upper and lower clamping jaws (17 to 20) of the second clamping unit (1, 2) and the horizontal clamping has been released, at least one further machining can be carried out.

10. Method for machining elongated workpieces (26, 26') made of wood, plastic and the like, which are clamped between at least one upper and one lower clamping jaw (17 to 20) of a first clamping unit (1) in such a way that at least one side (32) of the workpiece (26, 26') can be machined, and comprising a second clamping unit (2) which has at least one upper and one lower clamping jaw (17 to 20) and to which the first workpiece (26, 26') is transferred from the first clamping unit (1), which is clamped with the second clamping unit (2) in such a way that a further machining can be carried out on the workpiece (26, 26'), wherein at least two workpieces (26, 26') are clamped as a workpiece package next to and/or on top of one another in the first clamping unit (1, 2) in such a way that at least one side (32) of the one workpiece (26) of the workpiece package can be machined,
**characterized in that** the workpiece package is then clamped horizontally with vertical clamping, and that the workpiece package clamped in this way is displaced transversely to the longitudinal direction of the workpiece package (26, 26') after the vertical clamping has been released and is then clamped vertically by the clamping jaws (17 to 20) of the same clamping unit and the horizontal clamping is then released.

11. Method according to Claim 9,
**characterized in that** the workpiece package is displaced transversely to the longitudinal direction of the workpieces (26, 26') when clamped horizontally during transfer from one clamping unit (1, 2) to the other.

12. Machine for machining elongated workpieces made of wood, plastic and the like, for carrying out the method according to one of Claims 1 to 11, comprising at least two clamping units (1, 2) which can be moved on guide tracks (5, 6) lying parallel to one another, having upper and lower clamping jaws (17 to 20) and can be moved into a transfer position in which the clamping units (1, 2) are arranged next to one another in such a way that the workpieces (26, 26') can be transferred from one clamping unit (1, 2) to the other,
**characterized in that** at least the one clamping unit (1, 2) has at least one positionable stop (25) for adjusting the clamping depth of the workpiece (26, 26'), and the other clamping unit (1, 2) has at least one clamping pressure element (24) with which the workpiece (26, 26') can be clamped horizontally against the stop (25) during transfer transversely to its longitudinal direction.

13. Machine according to Claim 12,
**characterized in that** the lower clamping jaw (19, 20) of the at least one clamping unit (1, 2) is adjustable in the vertical direction to generate the clamping force.

14. Machine according to Claim 12 or 13, **characterized in that** the upper clamping jaw (17, 18) serves as a reference surface for the vertical clamping of the workpiece (26, 26') and the lower clamping jaw (19, 20) clamps the workpiece (26, 26') against the upper clamping jaws (17, 18).

15. Machine according to one of Claims 12 to 14, **characterized in that** the upper or lower clamping jaw (17 to 20) is provided with at least one rocker-shaped pivotable clamping element (40).

## Revendications

1. Procédé, destiné à usiner des pièces (26, 26') allongées en bois, en matière plastique et analogues, que l'on bride entre au moins une mâchoire de serrage (17 à 20) supérieure et inférieure d'une première unité de serrage (1) de telle sorte, qu'au moins une face (32) de la pièce (26, 26') puisse être usinée et avec une deuxième unité de serrage (2), qui comporte au moins une mâchoire de serrage (17 à 20) supérieure et inférieure et à laquelle la pièce (26, 26'), laquelle est bridée à l'aide de la deuxième unité de serrage (2) peut être transférée par la première unité de serrage (1), de telle sorte qu'un usinage ultérieur de la pièce (26, 26') puisse être entrepris,
**caractérisé en ce que** pour le transfert entre les deux unités de serrage (1, 2), l'on bride la pièce (26, 26') à l'horizontale, jusqu'au bridage horizontal, la pièce (26, 26') étant encore bridée à la verticale par les mâchoires de serrage (17 à 20) d'au moins l'une unité de serrage (1, 2), **en ce qu'**alors qu'elle est bridée à l'horizontale et que le bridage vertical est désolidarisé, l'on pousse la pièce (26, 26') à la transversale de la direction longitudinale de la pièce (26, 26') et on la bride ensuite à la verticale par les mâchoires de serrage (17 à 20) de la même unité de serrage ou par l'unité de serrage (1, 2) recevant la pièce (26, 26') et l'on désolidarise ensuite le bridage horizontal.

2. Procédé selon la revendication 1,
**caractérisé en ce que** pour le bridage horizontal de la pièce (26, 26') sont prévues des butées (24, 25), dont au moins l'une est ajustable, de préférence position-nable à la transversale de la direction longitudinale de la pièce (26, 26') pour le réglage de la profondeur de bridage.

3. Procédé selon la revendication 2,
**caractérisé en ce que** l'on génère la force de tension à l'aide de l'autre butée (24) ajustable.

4. Procédé selon l'une quelconque des revendications 1 à 3,
**caractérisé en ce que** l'on déplace au moins l'une, de préférence les deux unités de serrage (1, 2) le long d'une trajectoire de guidage (5, 6).

5. Procédé selon l'une quelconque des revendications 1 à 4,
**caractérisé en ce que** pour usiner la pièce (26, 26'), l'on fait passer au moins l'une, de préférence les deux unités de serrage (1, 2) devant au moins un outil (4).

6. Procédé selon l'une quelconque des revendications 1 à 5,
**caractérisé en ce que** pour générer la force de tension, au moins la mâchoire de serrage (19, 20) inférieure d'au moins l'une unité de serrage (1, 2) est ajustable en direction de la hauteur.

7. Procédé selon l'une quelconque des revendications 1 à 6,
**caractérisé en ce qu'**avec l'outil (4), l'on créé sur la pièce (26, 26') une feuillure (34) s'étendant dans sa direction longitudinale et **en ce que** l'on bride la pièce (26, 26') avec la mâchoire de serrage (17, 18) supérieure dans la feuillure (34) sur un talon (barrette) (36) délimitant la feuillure (34) contre la mâchoire de serrage (19, 20) inférieure.

8. Procédé selon l'une quelconque des revendications 1 à 6,
**caractérisé en ce qu'**avec l'outil (4)l'on créé sur la pièce (26, 26') une feuillure (34) s'étendant dans sa direction longitudinale et **en ce que** l'on bride la pièce (26, 26') avec la mâchoire de serrage (19, 20) inférieure dans la feuillure (34) sur un talon (36) délimitant feuillure (34) contre la mâchoire de serrage (17, 18) supérieure.

9. Procédé, destiné à usiner des pièces (26, 26') allongées en bois, en matière plastique et analogues, que l'on bride entre au moins une mâchoire de serrage (17 à 20) supérieure et inférieure d'une première unité de serrage (1) de telle sorte, qu'au moins une face (32) de la pièce (26, 26') puisse être usinée, et avec une deuxième unité de serrage (2), qui comporte au moins une mâchoire de serrage (17 à 20) supérieure et inférieure et à laquelle la pièce (26, 26'), laquelle est bridée à l'aide de la deuxième unité de serrage (2) peut être transférée par la première unité de serrage (1), de telle sorte qu'un usinage ultérieur de la pièce (26, 26') puisse être entrepris, au moins deux pièces (26, 26') étant bridées en tant que lot de pièces côte à côte et / ou en superposition dans la première unité de serrage (1, 2) de telle sorte qu'au moins une face (32) de l'une pièce (26) du lot de pièces puisse être usinée, **caractérisé en ce que** l'on bride ensuite le lot de pièces à l'horizontale, alors qu'elle est bridée à la verticale et **en ce qu'**après la désolidarisation du bridage vertical, l'on transfère le lot de pièces ainsi bridé vers la deuxième unité de serrage (1, 2), de sorte qu'après avoir bridé le lot de pièces avec les mâchoires de serrage (17 à 20) supérieure et inférieure de la deuxième unité de serrage (1, 2) et désolidarisé le bridage horizontal, au moins un usinage supplémentaire puisse être entrepris.

10. Procédé, destiné à usiner des pièces (26, 26') allongées en bois, en matière plastique et analogues, que l'on bride entre au moins une mâchoire de serrage (17 à 20) supérieure et inférieure d'une première unité de serrage (1) de telle sorte, qu'au moins une face (32) de la pièce (26, 26') puisse être usinée, et avec une deuxième unité de serrage (2), qui comporte au moins une mâchoire de serrage (17 à 20) supérieure et inférieure et à laquelle la pièce (26, 26') peut être transférée par la première unité de serrage (1), laquelle est bridée à l'aide de la deuxième unité de serrage (2) de telle sorte qu'un usinage ultérieur de la pièce (26, 26') puisse être entrepris, au moins deux pièces (26, 26') étant bridées en tant que lot de pièces côte à côte et / ou en superposition dans la première unité de serrage (1, 2) de telle sorte qu'au moins une face (32) de l'une pièce (26) du lot de pièces puisse être usinée, **caractérisé en ce que** l'on bride ensuite le lot de pièces à l'horizontale, alors qu'il est bridé à la verticale **en ce qu'**après avoir désolidarisé le bridage vertical, l'on déplace ensuite le lot de pièces ainsi bridé à la transversale de la direction longitudinale du lot de pièces (26, 26') et on le bride ensuite à la verticale par les mâchoires de serrage (17 à 20) de la même unité de serrage et l'on désolidarise par la suite le bridage horizontal.

11. Procédé selon la revendication 9, **caractérisé en ce qu'**alors qu'il est bridé à l'horizontale, lors du transfert de l'une vers l'autre unité de serrage (1, 2), l'on déplace le lot de pièces à la transversale de la direction longitudinale des pièces (26, 26').

12. Machine, destinée à usiner des pièces allongées en bois, en matière plastique ou analogues, destinée à mettre en œuvre le procédé selon l'une quelconque des revendications 1 à 11 précédentes, dotée d'au moins deux unités de serrage (1, 2) qui sont déplaçables sur des trajectoires de guidage (5, 6) situées à la parallèle les unes des autres, comportent des mâchoires de serrage (17 à 20) supérieure et inférieure et sont déplaçables dans une position de transfert, dans laquelle les unités de serrage (1, 2) sont placées côte à côte, de telle sorte que les pièces (26, 26') soient transférables de l'une vers l'autre unité de serrage (1, 2), **caractérisée en ce que** pour régler la profondeur de bridage de la pièce (26, 26'), l'au moins une unité de serrage (1, 2) comporte au moins une butée (25) posi-tionnable et l'autre unité de serrage (1, 2) comporte au moins un élément de tension presseur (24), à l'aide duquel pendant le transfert, la pièce (26, 26') peut être bridée à l'horizontale, à la transversale de sa direction longitudinale contre la butée (25).

13. Machine selon la revendication 12,
**caractérisée en ce que** la mâchoire de serrage (19, 20) inférieure d'au moins l'une unité de serrage (1, 2) est ajustable dans la direction verticale, pour générer la force de tension.

14. Machine selon la revendication 12 ou 13,
**caractérisée en ce que** la mâchoire de serrage (17, 18) supérieure fait office de surface de référence pour le bridage vertical de la pièce (26, 26') et **en ce que** la mâchoire de serrage (19, 20) inférieure contraint la pièce (26, 26') contre les mâchoires de serrage (17, 18) supérieures.

15. Machine selon l'une quelconque des revendications 12 à 14,
**caractérisé en ce que** la mâchoire de serrage (17 à 20) supérieure ou inférieure est munie d'au moins un élément de serrage (40) pivotant en forme de bascule.
